Europäisches Patentamt

European Patent Office

Office européen des brevets

(11) Publication number: **0 293 338**
**A1**

(12) **EUROPEAN PATENT APPLICATION**

(21) Application number: **88830205.6**

(22) Date of filing: **10.05.88**

(51) Int. Cl.⁴: **F 16 H 11/06**

(30) Priority: **28.05.87 IT 6746087**

(43) Date of publication of application:
**30.11.88 Bulletin 88/48**

(84) Designated Contracting States: **DE ES FR GB SE**

(71) Applicant: **FIAT AUTO S.p.A.**
**Corso Giovanni Agnelli 200**
**I-10135 Torino (IT)**

(72) Inventor: **Loffredo, Sergio**
**Via La Loggia 64**
**I-10134 Torino (IT)**

**Falzoni Gian Luigi**
**Via Malta, 36/10 bis**
**I-10141 Torino (IT)**

(74) Representative: **Buzzi, Franco et al**
**c/o Jacobacci-Casetta & Perani S.p.A. Via Alfieri, 17**
**I-10121 Torino (IT)**

(54) **Transmission with continuously variable change-speed gear for motor vehicles.**

(57) Transmission with continuously variable change-speed gear, of the type having expansible pulleys (2, 3) with hydraulic actuator system (7) to vary the transmission ratio through the expansion and contraction of the driving pulley (2). The hydraulic actuator system comprises a single flow control solenoid valve (8) operated by a programmable electronic control unit (9) designed to process, according to various selectable programs, electrical signals indicating the engine speed of the vehicle, its velocity of translation, the position of the accelerator pedal and the position of the brake pedal, and to operate accordingly the flow control solenoid valve (8).

Bundesdruckerei Berlin

## Description

### Transmission with continuously variable change-speed gear for motor vehicles

The present invention relates in general to transmissions with continuously variable change-speed gear for motor vehicles, of the type comprising a primary shaft carrying an expansible driving pulley, a secondary shaft carrying an expansible driven pulley, a driving belt surrounding said driving and driven pulleys and a hydraulic actuator system for varying the transmission ratio between said driving and driven pulleys.

More particularly, the invention relates to a transmission with continuously variable change-speed gear of the type currently fitted to the FIAT UNO SELECTA motor cars, in which the aforesaid hydraulic system for operating the variation of the transmission ratio includes, among others, control valve means adapted to control the expansion and the contraction of the driving pulley in response to the speed of rotation of said primary shaft and the position of the accelerator of the vehicle. In these known transmissions, the said valve means comprise a "primary valve" which modulates the flow of the pressurized primary hydraulic fluid conveyed by a pump to the control chamber of the driving pulley in dependence of "hydraulic command signals" indicating the speed of revolution of said driving pulley, in other words, of the primary shaft, but not as a function of the position of the accelerator pedal of the vehicle. The regulation of the primary valve in dependence of the pedal position is effected mechanically, by way of a "cam assembly" operated by the accelerator pedal.

Moreover, the control valve means of the aforesaid known transmission include a "motor brake valve" which interacts with the mechanical connection of the primary valve so as to regulate its decreasing velocity ratios when the so-called "low-drive" gear mode is selected.

The hydraulic system of transmission in question also includes a series of further control valve groups which, however, shall not be considered in the present Specification, in that they are not specifically related to the invention.

The above described embodiment of the control valve means of the known transmission have the drawback that, on one hand, they are relatively complicated due to the use of the two valves described above and, on the other hand, they restrict the operational flexibility of the transmission in that they cannot cover other operational parameters of the vehicle on which the transmission has been installed, which, however, would be desirable for a more complete adaptation of the transmission ratio to the demands imposed by the use of the vehicle.

The object of the present invention is to eliminate the aforesaid drawbacks and to provide a transmission with continuously variable change-speed gear of the above-defined type, which would be of a simpler construction and which lends itself to a more complete adaptation of the transmission ratio to the various conditions of use of the vehicle.

According to the invention, this is achieved by eliminating the primary valve with its corresponding cam drive and the motor brake valve and replacing these with:
- a single flow control solenoid valve;
- a sensor means for reading the engine speed of the vehicle, the translational velocity of the vehicle, the position of the accelerator pedal of the vehicle and the position of the brake pedal of the vehicle and emitting corresponding electrical signals, and
- a programmable electronic control unit fed with these said electrical signals supplied by said sensor means and capable of processing such signals according to a plurality of different selectable programs and operating in consequence the aforesaid flow control solenoid valve.

Owing to the concept of this solution, the control of the transmission ratio between the driving and the driven pulley can be selectively and in a more complete manner correlated with the effective conditions of use of the vehicle and adapted to the specific requirements and wishes of the user, according to various control strategies and logic. Thus, for example, by a corresponding selection of the operating program of the electronic processing unit, it is possible to choose, in accordance with the parameters determined by the sensor elements, a gear-change operating logic corresponding to maximum engine output (relatively low transmission ratios) or again to maximum economy (relatively high transmission ratios). Moreover, by way of the brake pedal position indicating signals, it is also possible to correlate the transmission control to particular conditions of travel which evidently cannot be made allowance for by the known transmissions.

Furthermore, the use of a single regulation valve and the elimination of the mechanical control elements make it possible to constructively simplify the transmission, thereby increasing its reliability at the same time.

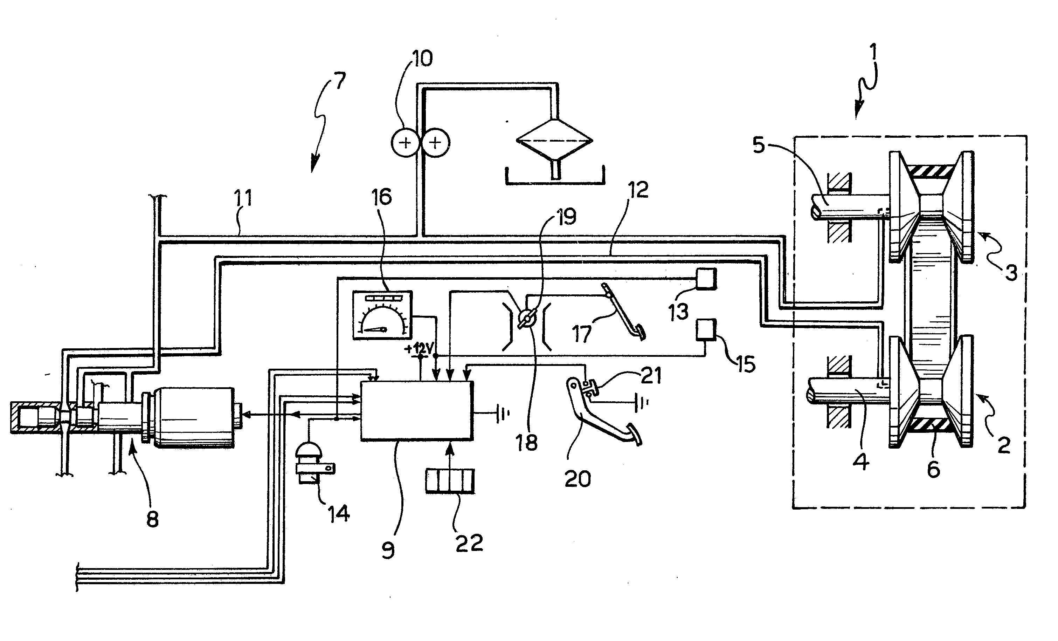

The invention will now be described in detail with reference to the attached drawing, given purely by way of a non-limiting example, which drawing diagrammatically illustrates an example of embodiment of the transmission according to the invention.

In the drawing, reference 1 designates in its entirety a continuously variable change-speed gear mounted between the engine and the powered wheels of a motor vehicle. The components of the gear unit 1 are generally of known type, and will not accordingly be described in detail. For the purposes of the present invention, it suffices to say that this gear unit comprises essentially two axially expansible pulleys 2, 3, being respectively the primary or driving and the secondary or driven pulleys, the first of which is driven by a primary shaft 4 and the second of which transmits the motion to a secondary shaft 5.

The two pulleys 2 and 3 are both constructed, in a known manner, of a fixed half-pulley and a movable half-pulley, on which applies an enveloping driving belt 6.

The axial displacements of the movable half-pulleys relative to the fixed half-pulleys of the two pulleys 2, 3 by means of which a continuous variation of the transmission ratios of the shafts 4 and 5 is obtained, are achieved by means of a hydraulic actuator system generally referenced with 7. In fact, the actuator system 7 illustrated in the drawing constitutes only a part of the hydraulic control system of gear unit 1; the other components of this system are not shown for the purpose of simplifying the illustration, being generally common to all transmissions with continuously variable transmission and do not specifically relate to the invention.

The actuator circuit 7 is connected to two hydraulic chambers (not shown in the drawing) functionally associated in a conventional manner with the movable half-pulleys of the two pulleys 2 and 3. In a general manner, when the actuator circuit 7 causes an expansion of the driving pulley 2 and a corresponding contraction of the driven pulley 3, there results a corresponding increase of the transmission ratio, and inversely.

The expansion and the contraction of the driving pulley 2 are effected, according to the invention, by means of a single flow control solenoid valve 8, controlled by a programmable electronic unit 9 designed, as will be made clear in the following, to determine the variations of the transmission ratio of gear unit 1 in dependence of the operational parameters of the vehicle on which the transmission has been installed, according to different selectable programs, stored in advance in the memory of unit 9.

The flow control solenoid valve 8 controls the conveying of a pressurized hydraulic fluid, coming from a pump 10 and a conduit 11, to the actuator chamber of the movable half-pulley of the driving pulley 2, through a pipe 12. The position of valve 8, and hence the capacity of the hydraulic fluid fed to the driving pulley 2 which determines the transmission ratio, is controlled electrically by means of the electrical control signals coming from unit 9 which is operatively connected to the electrical section of valve 8.

The control function operated by unit 9 is founded on the processing of the electrical signals fed thereto, indicating a multiplicity of operating parameters of the vehicle. In particular, these parameters are as follows:

- the speed of the engine: the corresponding signals can be generated by an electromagnetic of other sensor 13, operatively associated with the primary shaft 4 or another rotating part of the engine, or again may be derived from the ignition coil 14 of the engine;

- translational velocity of the vehicle: the corresponding signals can be obtained by means of a tachometric sensor 15 operatively associated with the secondary shaft 5, or may be derived from the speedometer 16 of the device;

- position of the accelerator pedal 17: the corresponding signals can be obtained by means of a potentiometer 18, for example, connected, in the case of an engine with carburettor to the butterfly valve 19 of the carburettor;

- position of the brake pedal 20, the signals of which can be obtained by means of a sensor 21.

The electrical signals fed to the unit 9 in the manner detailed above are processed by said unit according to a variety of modes of change in the transmission ratio as a function of the conditions detected by the various sensors, and in accordance with diverse programs which can be selected at the discretion of the driver, by means of a program selector referenced schematically 22. These programs, to each of which correspond different modes of variation of the transmission ratio, depending on the conditions detected by the different sensors, lend themselves in practice to render more flexible, and more adaptable to the operation of gear unit 1, as well as to the various requirements differing from normal use and incidental requirements. Thus, for example, by acting on the selector 22 it is possible to operate the electrical valve 8 in such a manner as to achieve a variation of ratio shifted towards smaller velocity ratios, thus bringing about an improved performance of the vehicle, or again, towards greater velocity ratios to bring about a more economical fuel consumption. In conclusion, it is possible to provide a multiplicity of different operational logics of the functioning of the transmission, immediately available for selection at the discretion of the driver.

**Claims**

1. Transmission with continuously variable speed-change gear for motor vehicles, comprising a primary shaft carrying an expansible driving pulley, a secondary shaft carrying an expansible driven pulley, a drive belt enveloping said driving and driven pulleys, and a hydraulic actuator system to vary the transmission ratio between said driven and driving pulleys, including valved control means for controlling the expansion and the contraction of the driving pulley as a function of the speed of rotation of said primary shaft and of the position of the accelerator pedal of the vehicle, characterised in that said valved control means (7) comprise:

- a single flow control solenoid valve 8;

- sensor means (13, 15, 19, 21) capable of reading the engine speed, the translational velocity of the vehicle, the position of the accelerator pedal (17) of the vehicle, the position of the brake pedal (20) of the vehicle and to supply corresponding electrical signals and

- a programmable electronic control unit (9) fed with said electrical signals supplied by said sensor means and capable of processing said signals according to a plurality of different programs which can be selected and thus operating in accordance with these programs the said flow control solenoid valve (8).

0293338

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 439 882 (NOBUMOTO) <br> * Page 13, lines 24-38; page 14, lines 1-24 * | 1 | F 16 H 11/06 |
| X | FR-A-2 550 739 (SEIKO) <br> * Page 2, lines 25-37; page 4, lines 19-30; figures * | 1 | |
| A | FR-A-2 448 077 (PONT-A-MOUSSON) <br> * Pages 4,5; figures * | 1 | |
| A | DE-A-3 318 410 (BOSCH) <br> * Whole document * | 1 | |
| A | EP-A-0 161 085 (FUJI) | | |
| A | EP-A-0 093 312 (NISSAN) | | |

TECHNICAL FIELDS SEARCHED (Int. Cl.4)

F 16 H 11/00
B 60 K 41/00

The present search report has been drawn up for all claims

| Place of search | Date of completion of the search | Examiner |
|---|---|---|
| THE HAGUE | 23-08-1988 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P0401)